# FASCICULE DE BREVET EUROPEEN

(11) **EP 2 569 559 B1**
(45) Date de publication et mention de la délivrance du brevet: **16.08.2017**
(21) Numéro de dépôt: 11721339.7
(22) Date de dépôt: 15.04.2011
(51) Int. Cl.: F16K 1/22, F16K 1/228, F16K 1/226

(54) **ROBINET A JOINT METALLIQUE**
HAHN MIT METALLDICHTUNG
FAUCET HAVING A METAL GASKET

(30) Priorité: 11.05.2010 FR 1002007
(43) Date de publication de la demande: 20.03.2013
(73) Titulaire: KSB S.A.S, 92635 Gennevilliers Cedex (FR)
(72) Inventeur: VINZIO, Pascal, F-33320 Eysines (FR); DUBOY, Dominique, F-33170 Gradignan (FR)
(74) Mandataire: Eidelsberg, Victor Albert
(86) Numéro de dépôt international: PCT/FR2011/000225
(87) Numéro de publication internationale: WO 2011/141641

(56) Documents cités:
- EP-A1- 0 378 342
- CH-A5- 616 496
- FR-A1- 2 615 580
- US-A1- 2007 215 834

## Description

Dans la construction de robinets à papillon, dont les conditions de fonctionnement combinent des températures inférieures à -50°C ou supérieures à 270°C et des pressions de sectionnement entre amont et aval supérieures à 25 bars, il est communément utilisé des composants exclusivement métalliques pour assurer un fonctionnement correct et une parfaite étanchéité.

Pour atteindre des performances d'étanchéité acceptables, des cinématiques et des constructions à triple excentration ont été mises au point. Voir les solutions décrites dans les brevets DE 2057305, FR 2674599, EP 0993571, FR 2698147, FR 2554539, DE 010250774, US 3945398, US 4480815, EP 0145632 et US 2007/215834. Ces solutions présentent un progrès certain par rapport aux robinets à papillon à double offset, présentant seulement une excentration et un décalage. Cette troisième excentration, correspondant à l'inclinaison du cône d'usinage du corps et/ou du papillon, permet une limitation du frottement entre siège et joint d'étanchéité.

Ces constructions permettent d'atteindre une pression de service allant jusqu'à 100 bars et donnent satisfaction lorsque la pression à étancher est appliquée dans le sens autoclave du papillon. Ce côté est généralement appelé le sens préférentiel.

Les valeurs de fuite constatées dans cette configuration sont communément comprises entre 0,1 et 1 Ncm³/mn par millimètre de diamètre du papillon.

Dans ces constructions, lorsque la pression est appliquée dans le sens opposé, dit non-autoclave, la performance d'étanchéité est généralement moindre, la fuite valant communément le double de celle constatée en sens autoclave. Ces robinets ne sont donc pas parfaitement bidirectionnels.

Cela est particulièrement vrai pour tous les joints métalliques qui assurent simultanément l'étanchéité statique entre eux-mêmes et l'appui du joint, qui peut être le papillon ou le corps, suivant qu'ils sont montés dans le papillon ou le corps et l'étanchéité dynamique entre eux-mêmes et le siège d'étanchéité. Ceci est vrai que les joints soient massifs comme dans les brevets FR 2674599, EP 0145632, DE 10250774, FR 2698147, DE 2057305 ou bien lamellaires comme dans les brevets FR 2773202 et US 3945398.

La raison majeure de ce comportement différentiel est que le serrage énergique du joint pour obtenir l'étanchéité statique contrarie fortement la liberté du joint à assurer la pression de contact contre le siège pour assurer l'étanchéité dynamique.

Dans le cas de l'emploi de joint d'étanchéité en tôle, comme dans les brevets GB 1536837, FR 2751716 et EP 0166641, l'étanchéité statique est correctement assurée et la souplesse du joint assure, également, correctement l'étanchéité dynamique en sens autoclave. Cependant, cette même souplesse contrarie fortement l'étanchéité au cas où la pression est appliquée en sens non-autoclave, car il se produit un déplacement du joint en sens non-autoclave.

Il existe aussi des joints qui séparent la fonction d'étanchéité statique de la fonction d'étanchéité dynamique. Ceci est particulièrement bien exposé dans les brevets FR 2398940, FR 2615580 et FR 2497905. Cette technologie présente l'avantage d'assurer une parfaite étanchéité statique, mais présente un inconvénient majeur :
- L'étanchéité garantit de 0,1 à 1 Ncm³/mn pour une longueur linéaire d'un millimètre de diamètre de joint, n'est valable que jusqu'à 25 bars de pression amont/aval. En effet, de par la souplesse de la construction par tore de tôle roulée, ce type de joint ne permet pas d'assurer une pression de contact supérieure à 25 bars en étanchéité dynamique. De plus, les efforts développés à des pressions supérieures à 25 bars induisent des efforts de contact et des coefficients de frottement entre la tôle roulée et le siège qui conduisent au déroulement de la tôle extérieure et donc à la destruction du joint.

L'invention pallie les défauts exposés ci-dessus. Dans un mode de conception nouveau, on propose de réaliser un joint d'étanchéité de type métal contre métal, pour robinet à papillon, qui soit capable d'étancher des pressions de service jusqu'à 100 bars avec un niveau d'étanchéité meilleur que 0,1 Ncm³/mn par millimètre de diamètre de l'obturateur ou du papillon. La particularité de ce type d'étanchéité étant qu'elle est équivalente, que la pression soit appliquée dans le sens amont/aval dit autoclave ou bien dans le sens aval/amont dit non-autoclave.

L'invention a donc pour objet un robinet comprenant un corps annulaire, un papillon qui y est monté tournant à 90° et un joint métallique annulaire interposé entre eux en étant logé dans un logement de l'un d'entre eux, tandis que l'autre forme un siège, incliné par rapport à l'axe du joint, siège avec lequel la face latérale libre d'un élément d'étanchéité dynamique du joint est en contact en une position fermée du robinet, l'élément d'étanchéité dynamique étant relié par une tôle à un élément élastique d'étanchéité statique serré dans le logement, de préférence suivant une direction radiale, perpendiculaire à l'axe d'écoulement du fluide dans le corps du robinet et de la tuyauterie, l'élément d'étanchéité dynamique ayant une première partie, du côté de l'élément d'étanchéité statique, qui est par les deux faces principales en contact avec le logement, et une deuxième partie, du côté du siège, où il y a un jeu entre le logement et les faces principales de l'élément d'étanchéité dynamique, lorsque cet élément d'étanchéité dynamique est à distance du siège. Les deux faces principales de l'élément d'étanchéité dynamique sont les faces qui s'étendent radialement par rapport à l'axe du corps du robinet.

La tôle souple comprend deux branches et un anneau est interposé entre les deux branches avec jeu entre lui et chacune des branches, lorsque le joint n'est pas soumis à une force de pression dans la direction de son axe. Les dimensions de cet anneau sont telles qu'il existe un jeu entre toutes ses faces et les éléments dynamique et statique du joint. L'anneau limite la déformée de la tôle sous l'effet de la pression, puisque l'anneau est placé au droit des deux ondes de souplesse des branches. L'invention supprime ainsi l'interaction de l'étanchéité dynamique avec l'étanchéité statique en intégrant un élément souple entre ces deux fonctions. Le jeu entre le logement et l'élément d'étanchéité dynamique fait que la deuxième partie de cet élément d'étanchéité dynamique, qui est la plus près du siège, peut basculer sous l'effet des forces de pression, la première partie s'appliquant alors au logement suivant une ligne circulaire, lorsque l'élément d'étanchéité dynamique est appliqué au siège. Le point de contact de la première partie avec le logement est plus près de la face la plus éloignée du siège qu'il ne l'est de la face la plus proche du siège.

L'élément ressort d'étanchéité statique est en contact par sa face frontale la plus éloignée de l'élément d'étanchéité dynamique avec le logement, de manière à ce qu'il lui soit appliqué une pression de contact radiale sensiblement perpendiculaire à l'axe du corps annulaire.

La tôle souple et l'élément ressort forme une étanchéité statique du joint dans le logement du corps par une pression de contact radiale, qui est sensiblement perpendiculaire à l'axe du corps annulaire et de valeur supérieure à la valeur de la différence de pression à étancher entre l'amont et l'aval du robinet.

De préférence, la tôle a des ondes de souplesse tournant leur concavité vers l'extérieur, ce qui ménage l'encombrement du joint et répartit au mieux la déformation de la tôle. Dans d'autres modes de réalisation, la concavité des ondes peut être tournée vers l'intérieur.

De préférence, la première partie des faces principales est appliquée au logement suivant une ligne circulaire, lorsque l'élément d'étanchéité dynamique est appliqué au siège, que la pression soit dirigée de l'amont vers l'aval (P) ou inversement (P'). Il vaut mieux que le cercle de contact (X) ou (Y) de la première partie avec le logement soit plus près de la face de l'élément d'étanchéité dynamique la plus éloignée du siège qu'il ne l'est de la face la plus proche du siège suivant que la pression est dirigée de l'amont vers l'aval (P) pour (X) ou inversement (P') pour (Y).

Suivant un mode de réalisation très préféré, le logement comprend un décrochement du côté de son ouverture et l'élément d'étanchéité dynamique ne s'étend qu'au droit de ce décrochement. L'élément d'étanchéité dynamique a, du côté opposé à sa face latérale libre, un bourrelet en contact avec le décrochement. Cela facilite beaucoup le basculement de l'élément d'étanchéité dynamique et permet ainsi de mieux résister aux forces de pression.

Le bord libre de la tôle peut être soudé à l'élément d'étanchéité dynamique, mais, de préférence, pour ne pas porter atteinte, par la soudure, aux propriétés des matériaux métalliques, le bord libre de la tôle est serti dans l'élément d'étanchéité dynamique.

Suivant un mode de réalisation d'un très grand intérêt, la surface de contact de l'élément d'étanchéité dynamique avec le siège comprend une lèvre arrondie tournant sa convexité vers le siège et, de préférence, deux lèvres arrondies, de forme demi-torique, de rayon valant du dixième au huitième de la largeur de l'élément d'étanchéité dynamique. Entre les deux lèvres, placé à l'extérieur de la tranche, est usiné un évidement, dont la profondeur représente du vingtième au huitième de la largeur de la tranche de l'élément d'étanchéité dynamique.

Les intérêts de cette construction sont :
- d'une part, d'obtenir un contact entre le joint et son siège qui a la forme d'une ligne ; ceci implique que la surface de contact se réduisant à une ligne, la pression de contact va augmenter de manière inversement proportionnelle à la réduction de surface et, par conséquence, la pression d'étanchéité sera augmentée de la même proportion ; et
- d'autre part, si la position du papillon du robinet n'est pas rigoureusement en pleine fermeture, le contact se déplacera pour former une nouvelle ligne de contact ; ceci est un avantage immense par rapport à nombre de robinets dont les surfaces complémentaires entre le joint et le siège ne supportent aucune imperfection de positionnement ou de tolérance de fabrication pour assurer une étanchéité parfaite.

L'invention est donc beaucoup plus tolérante aux écarts de fabrication et de montage.

Le robinet peut être un robinet à papillon à double excentration à siège sphérique, un robinet à papillon à double excentration à siège conique, un robinet à papillon à triple excentration à siège conique ou un robinet à triple excentration à siège torique.

Aux dessins annexés, données uniquement à titre d'exemple :
- la Figure 1: est une vue en perspective en coupe écorchée d'un joint métallique utilisé dans les robinets suivant l'invention ;
- la Figure 2: en est une vue partielle en coupe ;
- la Figure 3: est une vue en coupe d'un autre mode de réalisation d'un robinet suivant l'invention ;
- les Figures 4 et 5: illustrent comment fonctionne le joint de la Figure 3 ;
- la Figure 6: est une vue en coupe d'un autre mode de réalisation d'un robinet suivant l'invention ;
- les Figures 7 à 11: illustrent le comportement du robinet en fonctionnement ;
- les Figures 12 à 14: illustrent un perfectionnement du robinet suivant l'invention.

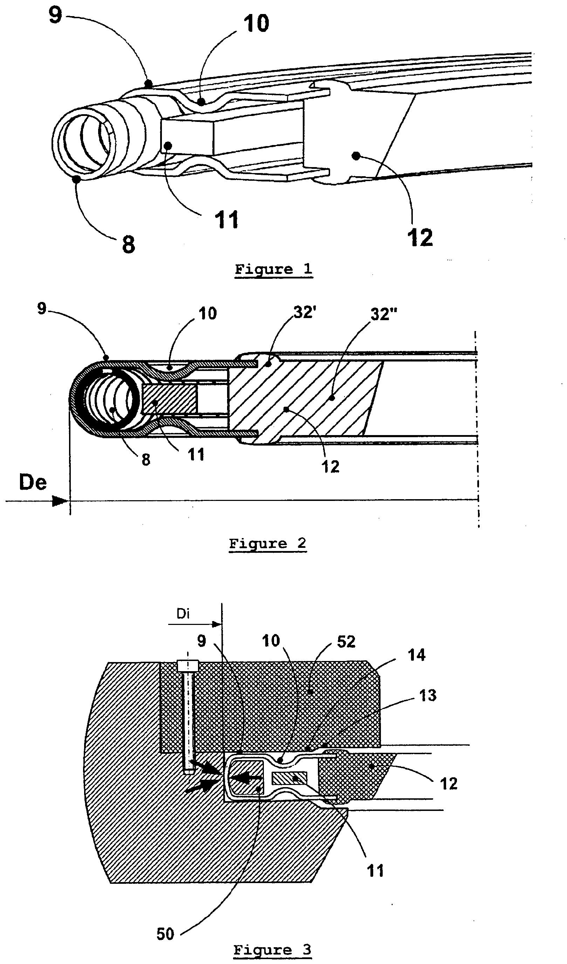

Suivant les Figures 1 et 2, la fonction d'étanchéité statique est assurée par un joint torique, constitué d'un ressort métallique 8, enroulé en spirale, et relié à une tôle métallique 9. Le diamètre extérieur De du tore ainsi formé est de valeur supérieure au diamètre Di du logement ménagé dans le corps 101, de manière à obtenir un serrage radial E2 assurant une pression de contact radiale, supérieure à la pression du fluide à étancher.

La tôle 9, enroulée sur 180° autour du ressort 8, est pourvue sur chacune des faces principales extérieures du joint d'une onde souple 10, qui permet au joint statique de rester fixe et bloqué dans le corps, tandis que le joint dynamique 12 annulaire conserve sa liberté d'expansion radiale lorsqu'il est sollicité par les efforts de contact entre lui-même et le siège d'étanchéité.

Le joint 12 comprend une première partie 32' du coté de la tôle 9 et une deuxième partie 32" du côté opposé, soit du côté du papillon d'un robinet. La première partie a une section transversale plus grande que la deuxième partie.

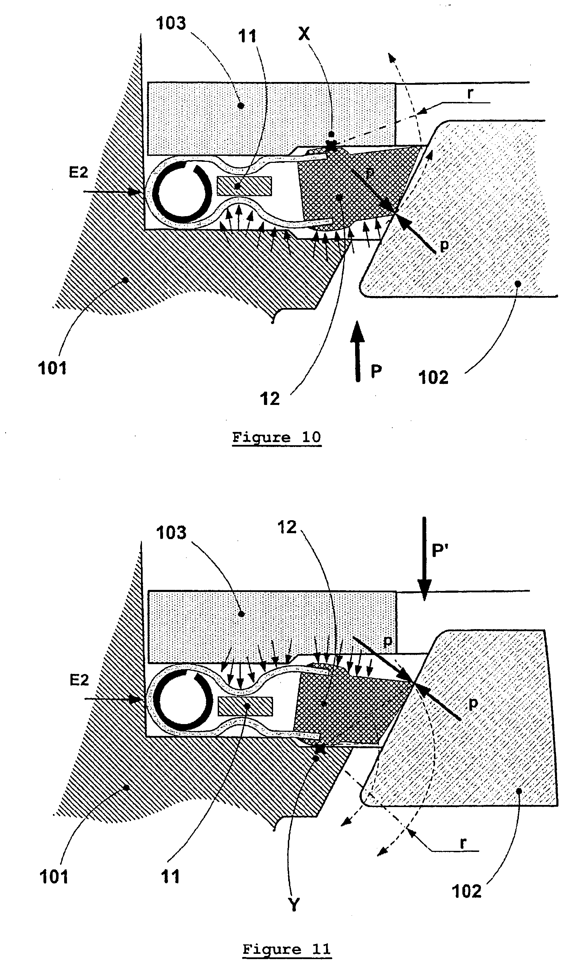

Afin que les efforts de la pression, ne viennent pas déformer la tôle 9, un anneau 11 est placé de manière concentrique au ressort 8 à l'intérieur du joint, au droit des deux ondes de souplesse 10. Les dimensions de cet anneau 11 sont telles qu'il existe un jeu entre toutes ses faces et le ressort 8, les ondes 10 et l'élément 12 d'étanchéité dynamique. De cette manière, lorsque la pression à étancher est appliquée sur une des faces du joint, la tôle 9 et ses ondes 10 sont supportées par cet anneau pour limiter la déformée de la tôle. Les Figures 10 et 11 montrent cette particularité de la construction.

Dans une variante, le tore en ressort à serrage axial est remplacé par un anneau 50 ou 60 de diamètre supérieur à son logement afin d'assurer un serrage radial à montage cryogénique.

Le tore est remplacé par l'anneau 50, qui par construction impose au joint un diamètre extérieur De, qui est supérieur au diamètre intérieur Di du corps comme montré à la Figure 3.

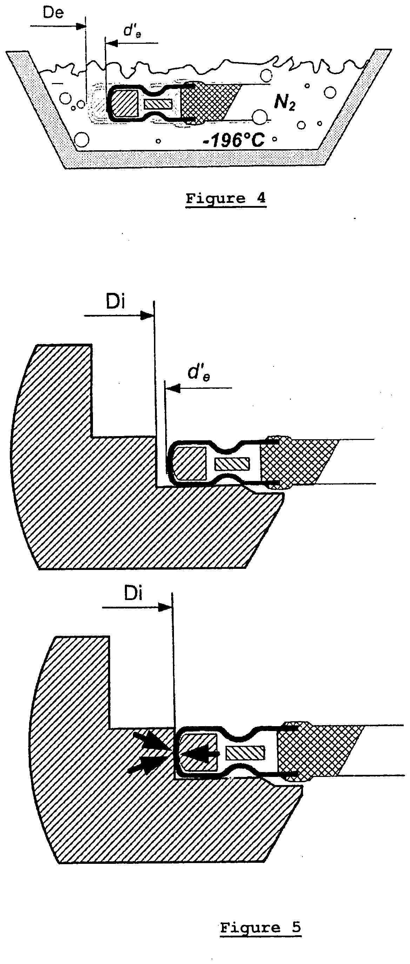

En plongeant le joint dans un bain d'azote liquide à -196°C, le joint va se rétracter d'une valeur de l'ordre de 10 µm/°C/mètre comme le montre la Figure 4. Lorsque le joint est à la température de l'azote liquide et que son diamètre De est devenu inférieur au diamètre Di, le joint est placé dans le corps, comme le montre la Figure 5, qui lui est à température ambiante. Lorsque le joint et le corps seront revenus à la même température, l'anneau 50 comprimera l'enveloppe 9 de la tôle formée entre lui-même et le corps qui assurera l'étanchéité statique. Le démontage de ce joint implique la destruction de l'enveloppe 9 et donc du joint lui-même.

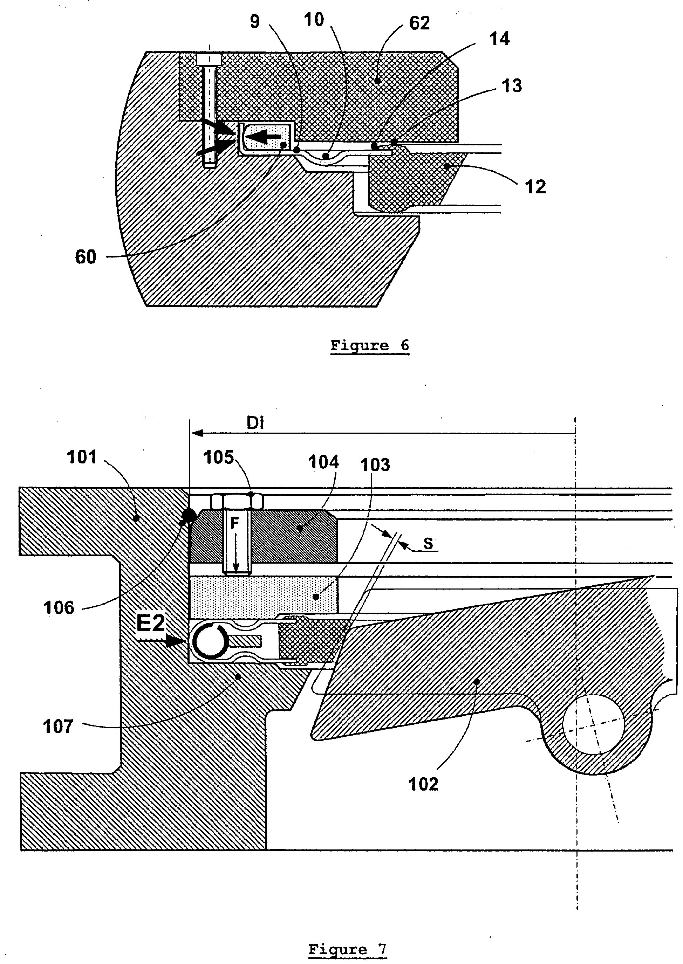

Dans un exemple, ne faisant pas partie de la présente invention, on peut imaginer ce même principe en utilisant une seule tôle formée suivant la Figure 6, où l'anneau 60 assure la même fonction que l'anneau 50 ou le ressort 8 des versions précédentes.

### Montage et fermeture sans pression

Comme montré à la Figure 7, le joint, tel que décrit dans les figures, est destiné à être monté dans un logement du corps 101 du robinet, tandis que le papillon 102 se trouve être le siège d'étanchéité du joint dynamique. On peut aussi monter le joint dans un logement du papillon et former le siège par le corps.

Afin d'assurer l'étanchéité statique du joint, ce dernier d'un diamètre extérieur De est monté dans un épaulement du corps 101 d'un diamètre intérieur Di plus petit que De, alors que la bride de serrage 103, la contre-bride de serrage 104, les vis 105 et le jonc de blocage coopèrent pour assurer l'effort de serrage F qui produit la pression de contact radiale E2. Cette étanchéité statique est assurée que la pression de fluide à étancher soit appliquée de l'amont vers l'aval ou inversement.

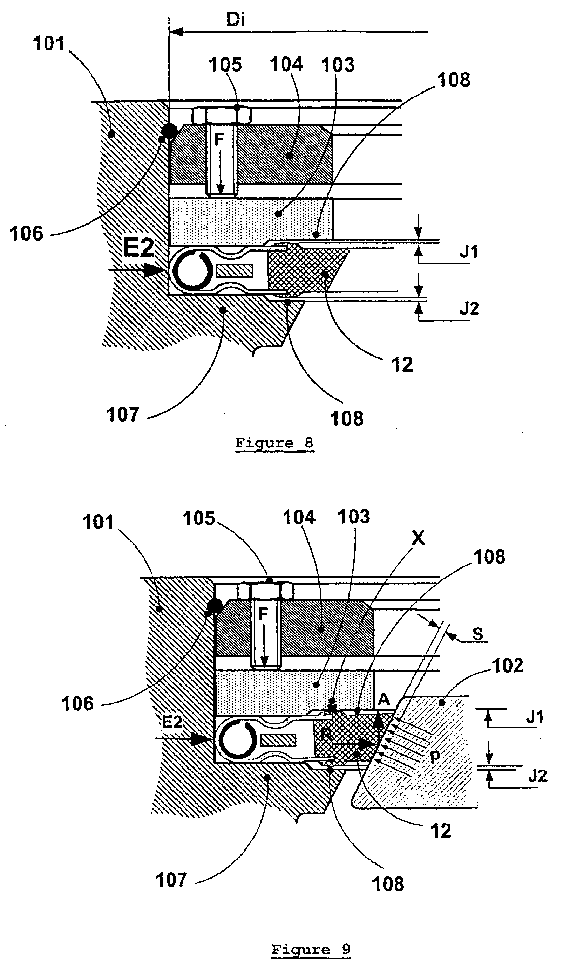

Afin de désolidariser l'étanchéité statique de l'étanchéité dynamique, on décrit ci-dessous le mode de construction qui est détaillé à la Figure 8. L'épaulement 107 du corps 101 et la bride de serrage 103 sont pourvus chacun d'un décrochement 108 qui assurent les jeux J1 et J2 entre la partie dynamique du joint et son logement. De cette manière, le joint statique se trouve bloqué entre la bride de serrage 103 et le corps 101, tandis que la partie dynamique du joint se trouve libre de tout contact, excepté de la tôle roulée 9.

Le joint d'étanchéité étant monté dans le corps, nous allons décrire maintenant l'interaction du papillon 102 et du joint pour traiter de l'étanchéité dynamique. En se reportant à la Figure 7, le diamètre extérieur du papillon 102 est supérieur au diamètre intérieur du joint dynamique 12. Ceci détermine une interférence du papillon S sur le joint dynamique 12. L'effort de fermeture du papillon 102 étant supérieur à la résistance mécanique du joint d'étanchéité 12, celui-ci va se déformer pour laisser le papillon se placer dans sa circonférence intérieure.

La Figure 9 montre la position fermée du papillon 12 après que celui-ci se soit placé dans le joint dynamique 12. Le matériau du joint dynamique 12 ayant été spécialement choisi pour ses caractéristiques d'allongement et de résistance à la traction, il s'ensuit une pression de contact, qui, par réaction sur le joint 12, se décompose en une force A qui provoque le repoussement axial du joint 12 jusqu'à son contact avec la bride de serrage 103 et annule le jeu J1 et l'augmentation du jeu J2, tandis que la force radiale R coopère à la pression de contact entre le papillon 102 et le joint dynamique 12 qui assure l'étanchéité dynamique du robinet. La tôle roulée 9 permet le déplacement du joint 12 tout en continuant d'assurer l'étanchéité entre le joint dynamique 12 et le demi-tore statique.

### Comportement sous pression amont

Le papillon 102 étant fermé, la pression amont est établie et va agir sur les composants internes à la veine fluide du robinet. La Figure 10 montre le comportement du joint lorsque cette pression P s'établit.

A la montée en pression, cette pression se répartit sur l'ensemble du papillon et de la face du joint exposés à cette pression. Le joint d'étanchéité 12, 9, 11 est soumis à la poussée de la pression P et donc repoussé vers la bride de serrage 103. Cette poussée provoque le déplacement et la déformation de la tôle 9 de la valeur des jeux compris entre la tôle 9 et l'anneau de la limitation d'écrasement 11. Jusqu'à ce que toutes les pièces soient en contact contre la bride de serrage 103. Le joint dynamique 12 qui est déjà en contact avec la bride 103 au point X se trouve donc en porte-à-faux sous l'effet de la pression P. Ceci provoque un mouvement de rotation de la section de ce joint autour du point X qui se trouve être le centre de la rotation de la section.

Cette caractéristique, particulièrement novatrice, provoque sur la génératrice amont de la surface d'étanchéité une surcompression p qui est d'autant plus forte que la pression est importante. Nous obtenons donc de cette façon une étanchéité autoclave directement proportionnelle à la pression.

### Comportement sous pression aval

Le papillon 102 étant fermé, la pression aval est établie et va agir sur les composants internes à la veine fluide du robinet. La Figure 11 montre le comportement du joint lorsque cette pression P' s'établit.

A la montée en pression, cette pression se répartit sur l'ensemble du papillon et de la face du joint exposés à cette pression. Le joint d'étanchéité 12, 9, 11 est soumis à la poussée de la pression P et donc repoussé vers le corps 101. Cette poussée provoque le déplacement et la déformation de la tôle 9 de la valeur des jeux compris entre la tôle 9 et l'anneau de limitation d'écrasement 11, jusqu'à ce que toutes les pièces soient en contact contre le corps 101.

Le joint dynamique 12 se trouve alors déplacé jusqu'à ce qu'il s'appuie sur le corps 101 au point Y. A partir de cette position, il se trouve en porte-à-faux sous l'effet de la pression P'. Ceci provoque un mouvement de rotation de la section de ce joint autour du point Y, qui se trouve être le centre de la rotation de la section.

Cette caractéristique, particulièrement encore plus novatrice, provoque sur la génératrice aval de la surface d'étanchéité une surcompression p qui est d'autant plus forte que la pression est importante. Nous obtenons donc de cette façon une étanchéité autoclave directement proportionnelle à la pression.

L'architecture de ce joint permet donc d'obtenir un robinet à papillon parfaitement autoclave dans les deux sens d'application de la pression, ce qui est particulièrement novateur vis-à-vis de tous les systèmes existants à ce jour.

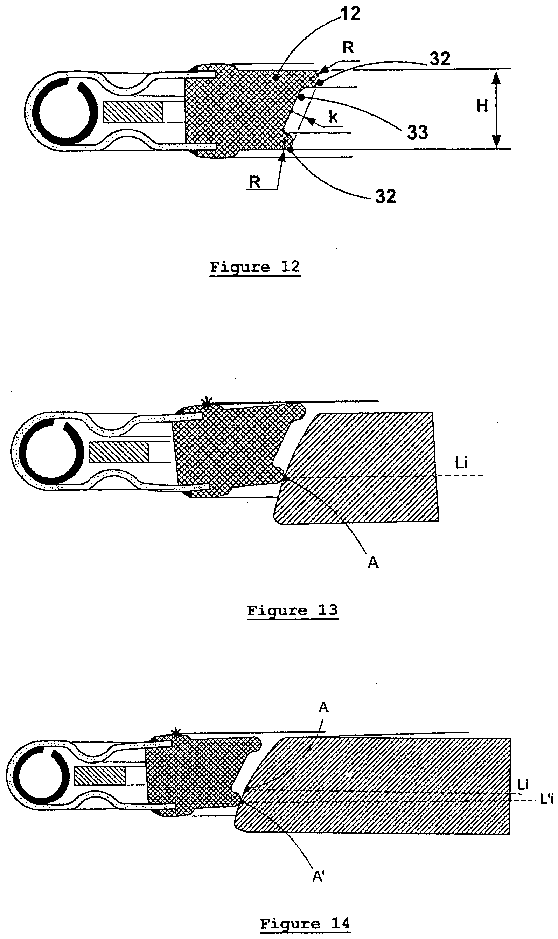

Dans un perfectionnement, montré à la Figure 12, il est prévu des lèvres 32 de forme demi-torique de rayon R valant d'un dixième à un huitième de la largeur H de la tranche du joint. Entre les deux lèvres 32 placées à l'extérieur de la tranche est usiné un évidement 33, dont la profondeur k vaut entre un vingtième et un huitième de H. Du côté de l'élément de l'étanchéité dynamique tourné vers l'élément d'étanchéité statique sont formés sur les faces principales de l'élément d'étanchéité dynamique deux bourrelets 34.

Afin de pouvoir utiliser ce type de joint dans tous les domaines de température depuis la cryogénie jusqu'aux échappements de machine thermique, ces joints peuvent associer tout type de matériaux métalliques.

En cryogénie, il sera privilégié des matériaux conservant des caractéristiques mécaniques acceptables jusqu'à -196°C, à savoir un acier inoxydable fortement allié de type chrome/nickel/cobalt pour le ressort 8. Ses caractéristiques propres alliées à un fort écrouissage dû au formage du ressort lui confèrent de bonnes caractéristiques d'élasticité à toutes températures. La tôle roulée 9 doit être suffisamment malléable pour se prêter à l'état de surface d'appui statique et assurer une bonne étanchéité. Il sera choisi donc un acier inoxydable austénitique de type 316 ou 316L. Pour les mêmes raisons, il sera choisi ce même matériau pour le joint dynamique 12.

Le matériau de l'anneau de limitation de déformée 11 n'a pas réellement besoin de nuance et de caractéristique particulière.

Pour les applications de moyennes températures comprises entre -50°C et +270°C, le matériau du ressort restera le même tandis que, pour la tôle 9 et le joint dynamique 12, il sera choisi des métaux possédant une bonne malléabilité et un bon coefficient de frottement vis-à-vis de l'acier inoxydable austénitique constituant le siège. Par exemple, il sera choisi du cuivre écroui, du laiton ou du bronze élastique comme du bronze au béryllium.

Pour les applications de hautes températures comprises entre +270°C et +600°C, le matériau du ressort restera le même tandis que, pour la tôle 9 et le joint dynamique 12, il sera choisi des métaux réfractaires conservant des caractéristiques mécaniques acceptables à ces fortes températures, tout en présentant un coefficient de frottement acceptable vis-à-vis de l'acier inoxydable austénitique constituant le siège. Il sera choisi, par exemple, un acier inoxydable austénitique avec un taux maîtrisé de silicone de type 1.4845 ou 310 ou 309s.

## Revendications

1. Robinet comprenant un corps (101) annulaire, un papillon (102) qui y est monté tournant à 90°, et un joint métallique annulaire interposé entre eux en étant logé dans un logement de l'un d'entre eux, tandis que l'autre forme un siège (102), incliné par rapport à l'axe du joint, siège (102) avec lequel la face latérale d'un élément (12) d'étanchéité dynamique du joint est en contact en une position fermée du robinet, l'élément d'étanchéité dynamique étant relié par une tôle (9) à un élément (8) ressort d'étanchéité statique serré dans le logement, dans lequel:
- la tôle (9) est souple,
- l'élément d'étanchéité dynamique a une première partie (32'), du côté de l'élément d'étanchéité statique, qui est en contact avec le logement, et une deuxième partie (32"), du côté du siège (102), où il y a un jeu entre le logement et les faces principales de l'élément d'étanchéité dynamique, lorsque cet élément d'étanchéité dynamique est à distance du siège (102), **caractérisé en ce que**:
- la tôle (9) souple comprend deux branches et un anneau (11) est interposé entre les deux branches avec jeu entre lui et chacune des branches lorsque le joint n'est pas soumis à une force de pression dans la direction de son axe.

2. Robinet suivant la revendication 1, **caractérisé en ce que** l'élément (8) ressort d'étanchéité statique est en contact par sa face frontale la plus éloignée de l'élément (12) d'étanchéité dynamique avec le logement, de manière à ce qu'il lui soit appliqué une pression de contact radiale (E2) sensiblement perpendiculaire à l'axe du corps (101) annulaire.

3. Robinet suivant la revendication 1 ou 2, **caractérisé en ce que** la première partie (32') des faces principales est appliquée au logement suivant une ligne circulaire, lorsque l'élément (12) d'étanchéité dynamique est appliqué au siège (102), que la pression soit dirigée de l'amont vers l'aval (P) ou inversement (P')..

4. Robinet suivant la revendication 3, **caractérisé en ce que** la ligne circulaire de contact (X) ou (Y) de la première partie (32') avec le logement est plus près de la face de l'élément d'étanchéité dynamique (12) la plus éloignée du siège (102) qu'il ne l'est de la face la plus proche du siège (102) suivant que la pression est dirigée de l'amont vers l'aval (P) pour (X) ou inversement (P') pour (Y).

5. Robinet suivant l'une des revendications précédentes, **caractérisé en ce que** la tôle a une onde (10) de souplesse tournant sa concavité vers l'extérieur.

6. Robinet suivant la revendication 1 ou 3, **caractérisé en ce que** le logement comprend un décrochement (108) du côté de son ouverture et l'élément (12) d'étanchéité dynamique ne s'étend qu'au droit de ce décrochement.

7. Robinet suivant la revendication 6, **caractérisé en ce que** l'élément d'étanchéité dynamique a, du côté opposé à sa surface latérale libre, un bourrelet (34) en contact avec le décrochement (108).

8. Robinet suivant l'une des revendications précédentes, **caractérisé en ce qu'**un bord de la tôle (9) est serti dans l'élément (12) d'étanchéité dynamique.

9. Robinet suivant l'une des revendications précédentes, **caractérisé en ce que** la surface de contact de l'élément (12) d'étanchéité dynamique avec le siège (102) comprend une lèvre (32) arrondie tournant sa convexité vers le siège.

10. Robinet suivant la revendication 9, **caractérisé en ce que** la lèvre (32) arrondie est de forme demi-torique de rayon R représentant du dixième au huitième de la largeur de la tranche de l'élément (12) d'étanchéité dynamique.

11. Robinet suivant la revendication 10, **caractérisé en ce qu'**il y a deux lèvres (32) arrondies et un évidement (33) est usiné entre elles dans l'élément (12) d'étanchéité dynamique, la profondeur de l'évidement (33) représentant du vingtième au huitième de la largeur de la tranche du joint.

## Patentansprüche

1. Ventil, umfassend ein ringförmiges Gehäuse (101), eine Drosselklappe (102), darin um 90° drehbar montiert ist, und eine zwischen sie gelegte ringförmige metallische Dichtung, indem sie in eine Aufnahme des einen davon aufgenommen ist, während das andere davon einen bezüglich der Achse der Dichtung geneigten Ventilsitz (102) bildet, mit dem die seitliche Fläche eines dynamischen Dichtungselements (12) der Dichtung in einer geschlossenen Stellung des Ventils in Kontakt steht, wobei das dynamische Dichtungselement über ein Blech (9) mit einem in die Aufnahme geklemmten statischen Federdichtungselement (8) verbunden ist, wobei:
- das Blech (9) biegsam ist,
- das dynamische Dichtungselement einen ersten Teil (32') auf der Seite des statischen Dichtungselements, der in Kontakt mit der Aufnahme steht, und einen zweiten Teil (32") auf der Seite des Ventilsitzes (102) aufweist, wo es ein Spiel zwischen der Aufnahme und den Hauptflächen des dynamischen Dichtungselements gibt, wenn sich dieses dynamische Dichtungselement im Abstand von dem Ventilsitz (102) befindet, **dadurch gekennzeichnet, dass**:
- das biegsame Blech (9) zwei Zweige umfasst, und ein Ring (11) zwischen die beiden Zweige mit Spiel zwischen ihm und jedem der Zweige gesetzt ist, wenn die Dichtung keiner Druckkraft in der Richtung ihrer Achse ausgesetzt ist.

2. Ventil nach Anspruch 1, **dadurch gekennzeichnet, dass** das statische Federdichtungselement (8) über seine am weitesten vom dynamischen Dichtungselement (12) entfernte Vorderfläche in Kontakt mit der Aufnahme steht, sodass ein radialer Kontaktdruck (E2) deutlich senkrecht zur Achse des ringförmigen Gehäuses (101) ausgeübt wird.

3. Ventil nach Anspruch 1 oder 2, **dadurch gekennzeichnet, dass** der erste Teil (32') der Hauptflächen an der Aufnahme gemäß einer Kreislinie anliegt, wenn das dynamische Dichtungselement (12) am Ventilsitz (102) anliegt, ob der Druck von stromaufwärts nach stromabwärts (P) oder umgekehrt (P') gerichtet ist.

4. Ventil nach Anspruch 3, **dadurch gekennzeichnet, dass** die Kontakt-Kreislinie (X) oder (Y) des ersten Teils (32') mit der Aufnahme näher an der am weitesten vom Ventilsitz (102) entfernten Fläche des dynamischen Dichtungselements (12) liegt als an der näheren Fläche des Ventilsitzes - (102), je nachdem, ob der Druck von stromaufwärts nach stromabwärts (P) für X oder umgekehrt (P') für (Y) gerichtet ist.

5. Ventil nach einem der vorhergehenden Ansprüche, **dadurch gekennzeichnet, dass** das Blech eine Biegsamkeitswelle (10) aufweist, deren Höhlung nach außen weist.

6. Ventil nach Anspruch 1 oder 3, **dadurch gekennzeichnet, dass** die Aufnahme eine Aussparung (108) auf der Seite ihrer Öffnung aufweist und sich das dynamische Dichtungselement (12) nur gegenüber dieser Aussparung erstreckt.

7. Ventil nach Anspruch 6, **dadurch gekennzeichnet, dass** das dynamische Dichtungselement auf der Seite entgegengesetzt zu seiner freien seitlichen Fläche einen Wulst (34) in Kontakt mit der Aussparung (108) aufweist.

8. Ventil nach einem der vorhergehenden Ansprüche, **dadurch gekennzeichnet, dass** ein Rand des Blechs (9) in dem dynamischen Dichtungselement (12) eingefasst ist.

9. Ventil nach einem der vorhergehenden Ansprüche, **dadurch gekennzeichnet, dass** die Kontaktfläche des dynamischen Dichtungselements (12) mit dem Ventilsitz (102) eine abgerundete Lippe (32) umfasst, deren Konvexität zum Ventilsitz weist.

10. Ventil nach Anspruch 9, **dadurch gekennzeichnet, dass** die abgerundete Lippe (32) halbringförmig ist, mit einem Radius R, der ein Zehntel bis ein Achtel der Breite des Randes des dynamischen Dichtungselements (12) beträgt.

11. Ventil nach Anspruch 10, **dadurch gekennzeichnet, dass** es zwei abgerundete Lippen (32) gibt und eine Aushöhlung (33) zwischen ihnen im dynamischen Dichtungselement (12) ausgearbeitet ist, wobei die Tiefe der Aushöhlung (33) ein Zwanzigstel bis ein Achtel des Rands der Dichtung beträgt.

## Claims

1. Valve comprising an annular body (101), a butterfly (102) which is mounted therein in a manner rotating at 90°, and an annular metal gasket which is interposed between them while being accommodated in a housing belonging to one of them, whereas the other of them forms a seat (102) which is inclined in relation to the axis of the gasket and with which the free lateral face of a dynamic-sealing element (12) of the gasket is in contact when the valve is in a closed position, said dynamic-sealing element being connected by a metal sheet (9) to a spring static-sealing element (8) which is clamped in the housing,
**characterised in that**:
- the metal sheet (9) is flexible; and
- the dynamic-sealing element has a first part (32'), on the same side as the static-sealing element, which is in contact with the housing, and a second part (32"), on the same side as the seat (102), wherein there is a clearance between the housing and the main faces of the dynamic-sealing element, when the said dynamic-sealing element is at a distance from the seat (102), the flexible metal sheet (9) comprises two side-pieces and a ring (11) is interposed between the two side-pieces with clearance between it and each of the side-pieces when the gasket is not subjected to a compressive force in the direction of its axis.

2. Valve according to claim 1, **characterised in that** the static-sealing spring element (8) is in contact, via its front face which is furthest away from the dynamic-sealing element (12), with the housing in such a way that there is applied to said element a radial contact pressure (E2) which is substantially perpendicular to the axis of the annular body (101).

3. Valve according to claim 1 or 2, **characterised in that** the first part (32') of the main faces is applied to the housing along a circular line, when the dynamic-sealing element (12) is applied to the seat (102), whether the pressure is directed from the upstream side towards the downstream side (P), or *vice versa* (P').

4. Valve according to claim 3, **characterised in that** the circular line of contact (X) or (Y) of the first part (32') with the housing is closer to that face of the dynamic-sealing element (12) which is furthest away from the seat (102) than it is to the face which is closest to the seat (102), according to whether the pressure is directed from the upstream side towards the downstream side (P) in the case of (X), or vice *versa* (P') in the case of (Y).

5. Valve according to one of the preceding claims, **characterised in that** the metal sheet has a flexibility corrugation (10) which has its concave side facing towards the outside.

6. Valve according to claim 1 or 3, **characterised in that** the housing comprises a setback (108) on the same side as its opening and the dynamic-sealing element (12) extends only at right angles to the said setback.

7. Valve according to claim 6, **characterised in that** the dynamic-sealing element has, on the opposite side to its free lateral surface, a bead (34) which is in contact with the setback (108).

8. Valve according to one of the preceding claims, **characterised in that** one edge of the metal sheet (9) is crimped in the dynamic-sealing element (12).

9. Valve according to one of the preceding claims, **characterised in that** the contact surface between the dynamic-sealing element (12) and the seat (102) comprises a rounded lip (32) whose convex side faces towards the seat.

10. Valve according to claim 9, **characterised in that** the rounded lip (32) is of semi-toric shape with a radius R representing from one tenth to one eighth of the width of the edge of the dynamic-sealing element (12).

11. Valve according to claim 10, **characterised in that** there are two rounded lips (32) and a recess (33) is machined between them in the dynamic-sealing element (12), the depth of the recess (33) representing from one twentieth to one eighth of the width of the edge of the gasket.
